# EUROPEAN PATENT SPECIFICATION

(11) **EP 4 120 768 B1**
(45) Date of publication and mention of the grant of the patent: **20.05.2026**
(21) Application number: 21785380.3
(22) Date of filing: 08.04.2021
(51) Int. Cl.: H04L 5/00, H04W 52/02, H04W 76/28

(54) **DETECTION METHOD AND APPARATUS**
DETEKTIONSVERFAHREN UND VORRICHTUNG
PROCÉDÉ ET APPAREIL DE DÉTECTION

(30) Priority: 10.04.2020 CN 202010281678
(43) Date of publication of application: 18.01.2023
(73) Proprietor: Huawei Technologies Co., Ltd., Shenzhen, Guangdong 518129, (CN)
(72) Inventor: TIE, Xiaolei, Shenzhen, Guangdong 518129 (CN); ZHOU, Han, Shenzhen, Guangdong 518129 (CN); ZHANG, Zhanzhan, Shenzhen, Guangdong 518129 (CN); HUA, Meng, Shenzhen, Guangdong 518129 (CN); HUANG, Wenwen, Shenzhen, Guangdong 518129 (CN)
(74) Representative: Pfenning, Meinig & Partner mbB
(86) International application number: PCT/CN2021/086013
(87) International publication number: WO 2021/204214

(56) References cited:
- CN-A- 109 496 454
- CN-A- 109 804 662
- CN-A- 110 521 275
- CN-A- 112 399 571
- US-A1- 2019 254 110
- US-A1- 2019 254 110
- XIAOMI COMMUNICATIONS: "Discussion on PDCCH-WUS missing problems during BWP switching and handover", vol. RAN WG2, no. Chongqing, China; 20191014 - 20191018, 3 October 2019 (2019-10-03), XP051790952, Retrieved from the Internet <URL:http://www.3gpp.org/ftp/tsg_ran/WG2_RL2/TSGR2_107bis/Docs/R2-1912918.zip> [retrieved on 20191003]
- VIVO: "Maintenance of PDCCH-based power saving signal", vol. RAN WG1, no. e-Meeting; 20200224 - 20200306, 14 February 2020 (2020-02-14), XP052343402, Retrieved from the Internet <URL:https://ftp.3gpp.org/tsg_ran/WG1_RL1/TSGR1_100_e/Docs/R1-2000337.zip R1-2000337.docx> [retrieved on 20200214]
- NOKIA ET AL: "On open issues related to DCI format 2_6", vol. RAN WG1, no. e-Meeting; 20200224 - 20200306, 14 February 2020 (2020-02-14), XP052344109, Retrieved from the Internet <URL:https://ftp.3gpp.org/tsg_ran/WG1_RL1/TSGR1_100_e/Docs/R1-2001048.zip R1-2001048.docx> [retrieved on 20200214]
- XIAOMI COMMUNICATIONS: "Discussion on PDCCH-WUS missing problems during BWP switching and handover", 3GPP DRAFT; R2-1912918 DISCUSSION ON PDCCH-WUS MISSING PROBLEMS DURING BWP SWITCHING AND HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 3 October 2019 (2019-10-03), Mobile Competence Centre ; 650, route des Lucioles ; F-06921 Sophia-Antipolis Cedex ; France, XP051790952

## Description

### TECHNICAL FIELD

This application relates to the field of communication technologies, and in particular, to a detection method and an apparatus.

### BACKGROUND

Compared with an LTE system, a new radio (new radio, NR) system currently being formulated by the 3rd generation partnership project (3rd generation partnership project, 3GPP) standard organization has advantages such as supporting a larger transmission bandwidth, a higher transmission rate, and a lower delay. Although the foregoing features of the NR system provide more application scopes for the NR system, power consumption load of a terminal-side device is greatly increased.

To reduce power consumption of the terminal-side device, the 3GPP introduces a discontinuous reception (discontinuous reception, DRX) mechanism in an NR system of the Rel-16 version. When DRX is configured for the terminal-side device, a status of the terminal-side device may be classified into a DRX active (Active) state and a DRX non-active (non-active) state. The terminal-side device is in the DRX active state within DRX on duration (ON Duration) at intervals of a specific period, and the on duration in which the terminal-side device is in the DRX active state is also referred to as an active time (Active Time). When the terminal-side device is in the active time, the terminal-side device continuously detects a physical downlink control channel (physical downlink control channel, PDCCH). If the terminal-side device enters a sleep mode (DRX non-active), the terminal-side device does not detect the PDCCH.

To further reduce power consumption of the terminal-side device, before the DRX on duration, wake-up signal (wake up signal, WUS) indication information may be further sent to indicate the terminal-side device whether to detect the PDCCH in next one or more DRX cycles.

Further, in many cases, a network-side device does not always schedule data to the terminal-side device, but the terminal-side device still needs to periodically detect the PDCCH to determine whether there is scheduling. If there is no service transmission or scheduling data between the network-side device and the terminal-side device, PDCCH-only (PDCCH-only) detection of the terminal-side device exists, resulting in a waste of power consumption. Therefore, to further reduce power consumption of the terminal-side device, before the DRX on duration, the network-side device may further send dormancy indication (dormancy indication) information by using downlink control information (downlink control information, DCI). The dormancy indication information indicates the terminal-side device to perform BWP switching. After receiving the dormancy indication information, the terminal-side device may perform BWP switching, for example, switch to a dormant BWP, so that the terminal-side device does not need to detect the PDCCH. BWP switching takes a specific time. During BWP switching, the terminal-side device cannot receive or send data.

Currently, the wake-up signal indication information is definitely sent, but the dormancy indication information is optional. If both the wake-up signal indication information and the dormancy indication information are sent by using the DCI, how to determine a start time of BWP switching to avoid that the terminal-side device cannot receive data because the terminal-side device and the network-side device inconsistently define the start time of BWP switching is an urgent problem to be resolved.

XIAOMI COMMUNICATIONS: "Discussion on PDCCH-WUS missing problems during BWP switching and handover", 3GPP DRAFT, R2-1912918, 3GPP, MOBILE COMPETENCE CENTRE; 650, ROUTE DES LUCIOLES; F-06921 SOPHIA-ANTIPOLIS CEDEX; FRANCE, vol. RAN WG2, no. Chongqing, China, 20191014 - 20191018, 3 October 2019 (2019-10-03), discusses PDCCH-WUS missing problems during BWP switching and handover.

VIVO: "Maintenance of PDCCH-based power saving signal", 3GPP DRAFT, R1-2000337, 3GPP, MOBILE COMPETENCE CENTRE; 650, ROUTE DES LUCIOLES; F-06921 SOPHIA-ANTIPOLIS CEDEX; FRANCE, vol. RAN WG1, no. e-meeting, 20200224 - 20200224, 14 February 2020 (2020-02-14), discusses issues for power saving PDCCH.

US 2019/254110 A1 discloses mechanisms for enabling reduced power consumption at a user equipment in wireless communication systems.

NOKIA ET AL: "On open issues related to DCI format 2_6", 3GPP DRAFT, R1-2001048, 3GPP, MOBILE COMPETENCE CENTRE; 650, ROUTE DES LUCIOLES; F-06921 SOPHIA-ANTIPOLIS CEDEX; FRANCE, vol. RAN WG2, , no. e-meeting, 20200224 - 20200306, 14 February 2020 (2020-02-14), discusses open issues related to DCI format 2_6".

### SUMMARY

Embodiments of this application provide a detection method according to claim 1, a detection method according to claim 6, a communication apparatus according to claim 9, a computer-readable storage medium according to claim 10, a chip according to claim 11 and a computer program product according to claim 12, to determine a start time of BWP switching.

### BRIEF DESCRIPTION OF DRAWINGS

FIG. 1 is a schematic diagram of a network architecture that is applicable to an embodiment of this application;
FIG. 2 is a schematic diagram of a DRX cycle;
FIG. 3 is a schematic diagram of a time sequence according to an embodiment of this application;
FIG. 4 is a schematic flowchart of a detection method according to an embodiment of this application;
FIG. 5 is a schematic diagram of a time sequence according to an embodiment of this application;
FIG. 6 is a schematic diagram of a time sequence according to an embodiment of this application;
FIG. 7 is a schematic flowchart of a detection method according to an embodiment of this application;
FIG. 8 is a schematic diagram of a time sequence according to an embodiment of this application;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

The following describes embodiments of this application in detail with reference to the accompanying drawings of this specification.

Technical solutions provided in embodiments of this application may be applied to various mobile communication systems, for example, a new radio (new radio, NR) system, a long term evolution (long term evolution, LTE) system, and an advanced long term evolution (advanced long term evolution, LTE-A) system.

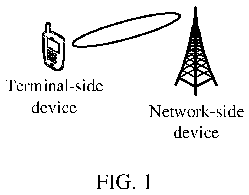

Embodiments of this application may also be applied to another communication system, for example, a narrowband internet of things (NB-IoT, Narrow Band-Internet of Things) system, a machine type communication (MTC, Machine Type Communication) system, or a future next-generation communication system, provided that C-DRX, wake-up signal indication information, and dormancy indication information are configured for a communication entity in the communication system. As shown in FIG. 1, a network-side device and a terminal-side device form a communication system. In the communication system, the network-side device sends information to the terminal-side device through a downlink channel, and the terminal-side device sends information to a base station through an uplink channel.

The following describes some terms in embodiments of this application, to facilitate understanding of a person skilled in the art.
(1) A terminal-side device includes a device that provides a user with voice and/or data connectivity, for example, may be a handheld device having a wireless connection function, or a processing device connected to a wireless modem. The terminal-side device may communicate with a core network via a radio access network (radio access network, RAN), and exchange a voice and/or data with the RAN. The terminal-side device may include user equipment (user equipment, UE), a wireless terminal-side device, a mobile terminal-side device, a device-to-device (device-to-device, D2D) communication terminal-side device, a vehicle-to-everything (vehicle-to-everything, V2X) terminal-side device, a machine-to-machine/machine type communication (machine-to-machine/machine-type communications, M2M/MTC) terminal-side device, an internet of things (internet of things, IoT) terminal-side device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), and a user agent (user agent), a user device (user device), or the like. For example, the terminal-side device may include a mobile phone (or referred to as a "cellular" phone), a computer having a mobile terminal-side device, a portable, pocket-sized, handheld, or computer built-in mobile apparatus. For example, the terminal-side device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal-side device may alternatively include a limited device, for example, a device with low power consumption, a device with a limited storage capability, or a device with a limited computing capability. For example, the terminal-side device includes an information sensing device such as a barcode, radio frequency identification (radio frequency identification, RFID), a sensor, a global positioning system (global positioning system, GPS), or a laser scanner.

By way of example, and not limitation, in embodiments of this application, the terminal-side device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

(2) A network-side device, for example, includes an access network (access network, AN) device, may be a device that communicates with a terminal-side device over an air interface in an access network by using one or more cells, and may be configured to perform mutual conversion between a received over-the-air frame and an internet protocol packet, and function as a router between the terminal-side device and the remaining part of the access network. For example, the network-side device may include an evolved NodeB (evolutional Node B, NodeB, eNB, or e-NodeB) in an LTE system or an LTE-A system, or may include a next-generation NodeB (next generation node B, gNB) in an NR system, or the like. This is not limited in this embodiment of this application.

Certainly, the network-side device may further include a core network device. However, the technical solutions provided in embodiments of this application mainly relate to an access network device. Therefore, in the following, unless otherwise specified, a "network-side device" described below is an access network device.

(3) A downlink control channel may be a physical downlink control channel (physical downlink control channel, PDCCH), an enhanced physical downlink control channel (enhanced physical downlink control channel, EPDCCH), or another downlink control channel. There is no specific limitation.

(4) "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely intended to distinguish between different signaling, but do not indicate that the two types of information are different in content, priorities, a sending sequence, importance, or the like.

The foregoing describes some concepts in embodiments of this application. The following describes technical features in embodiments of this application.

### 1. A discontinuous reception (discontinuous reception, DRX) mechanism

In an LTE system, a DRX mechanism (or referred to as a DRX mode, a DRX state, or the like) is designed in 3GPP to reduce power consumption of a terminal-side device in a connected state. A terminal-side device configured with DRX performs discontinuous reception in a radio resource control (Radio Resource Control, RRC) connected state. In this case, a state of the terminal-side device may also be referred to as a connected DRX (Connected-DRX, C-DRX) state.

The DRX mechanism may enable the terminal-side device to periodically enter a sleep mode (sleep mode) at some times (which may be defined as a non-active time (inactive time)) without detecting a PDCCH that is masked by a specified cell radio network temporary identifier (cell radio network temporary identity, C-RNTI). When detection needs to be performed (the time may be defined as an active time (active time)), the terminal-side device wakes up (wake up) from the sleep mode and detects these PDCCHs. In this way, power consumption of the terminal-side device can be reduced.

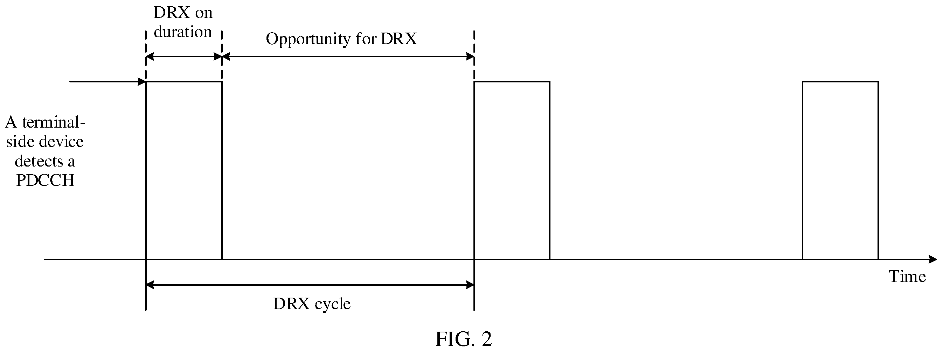

A basic time unit in the DRX mechanism is a DRX cycle, or is referred to as a DRX cycle (cycle). FIG. 2 is used as an example. In FIG. 2, a DRX cycle includes DRX on duration (ON duration) and an opportunity for DRX (opportunity for DRX). The DRX on duration may also be referred to as on duration for short, which is collectively referred to as DRX on duration in this embodiment of this application.

In this embodiment of this application, a state of the terminal-side device within the DRX on duration may be referred to as a DRX active state, or may be referred to as a wake-up (wake up) state, or may be referred to as DRX_ON. Within the DRX on duration, the terminal-side device is woken up, and detects and receives the PDCCH. In this embodiment of this application, the wake-up state is also referred to as an active state. A time in which the terminal-side device is in the DRX active state is also referred to as an active time (active time).

In this embodiment of this application, a state of the terminal-side device in the opportunity for DRX may be referred to as a DRX non-active (non-active) state, or may be referred to as a sleep mode (sleep mode), or may be referred to as DRX_OFF. A time in which the terminal-side device is in the DRX non-active state is also referred to as a non-active time (non-active time).

The terminal-side device in the DRX non-active state may disable communication components such as a radio frequency transceiver (or a receiver) and a baseband processor to reduce power consumption, or although the radio frequency component is enabled, only some detection processes with low power consumption are performed, for example, some messages that the terminal-side device needs to detect, for example, a paging message, a broadcast message, or a system message. It should be noted that the terminal-side device in the non-active time only does not receive one type of DCI on the PDCCH. For example, for an NR system, the terminal-side device does not need to detect a specified PDCCH in the non-active time. The specified PDCCH means that cyclic redundancy check (cyclic redundancy check, CRC) of the PDCCH is scrambled by using any one of the following manners:
a cell radio network temporary identifier (cell RNTI, C-RNTI), a configured scheduling radio network temporary identifier (configured scheduling RNTI, CS-RNTI), an interruption RNTI (interruption RNTI, INT-RNTI), a slot format indicator RNTI (slot format indicator-RNTI, SFI-RNTI), a semi-persistent channel state indicator RNTI (semi-persistent channel state information RNTI, SP-CSI-RNTI), a transmit power control physical uplink control channel (physical uplink control channel, PUCCH)-RNTI (transmit power control PUCCH RNTI, TPC-PUCCH-RNTI), a transmit power control physical uplink shared channel (physical uplink shared channel, PUSCH) RNTI (transmit power control PUSCH RNTI, TPC-PUSCH-RNTI), or a transmit power control sounding reference signal (sounding reference signal, SRS) RNTI (transmit power control RNTI, TPC-SRS-RNTI).

The terminal-side device needs to detect, at the active time, PDCCHs scrambled by these RNTIs.

The terminal-side device in the non-active time may receive other DCI that is in the PDCCH and that is not affected by whether the terminal-side device is in the active time, and may receive data from another physical channel, for example, a physical downlink shared channel (physical downlink shared channel, PDSCH), an acknowledgment (acknowledgment, ACK), or a negative acknowledgment (negative-acknowledgment, NACK).

### 2. Wake-up signal (wakeup signalling, WUS) indication information

To further reduce power consumption of a terminal-side device, wake-up signal indication information is introduced. The wake-up signal indication information is sent by using DCI. A DCI format of the DCI may be a DCI format 2_6 (DCI format 2_6), and CRC of the DCI is scrambled by using a power saving RNTI (power saving RNTI, PS-RNTI). Specifically, before DRX on duration, the wake-up signal indication information may indicate the terminal-side device whether to wake up to detect a PDCCH in next one or more DRX cycles.

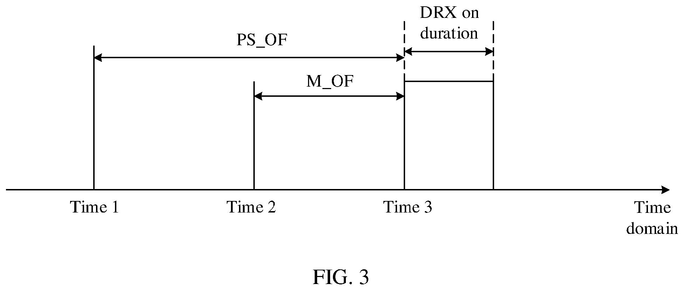

For example, as shown in FIG. 3, if the terminal-side device detects DCI including wake-up signal indication information, the terminal-side device starts a timer (referred to as a drx-ondurationTimer in the standard), and detects a PDCCH within DRX on duration. If the terminal-side device does not detect the DCI including the wake-up signal indication information, the terminal-side device does not start the drx-ondurationTimer. That is, the terminal-side device does not wake up in the DRX cycle, but enters a sleep mode to reduce power consumption.

It should be noted that, in comparison with detecting the PDCCH within the DRX on duration, detecting the wake-up signal indication information for the terminal-side device is power saving and less complex. Therefore, power consumption of the terminal-side device can be greatly reduced by using the wake-up signal indication information.

Specifically, with reference to FIG. 3, a network-side device may configure a power saving offset (PS_offset), which is denoted as PS_OF in FIG. 3. The PS_offset may be used for determining a start time at which the terminal-side device detects the wake-up signal indication information. The terminal-side device may start to detect the wake-up signal indication information at a time before the start time of the DRX on duration and there is the power saving offset between the time and the start time of the DRX on duration. In FIG. 3, a time 1 indicates the time at which the terminal-side device starts to detect the wake-up signal indication information.

Further, the terminal-side device does not always detect the wake-up signal indication information before the DRX on duration. For example, in FIG. 3, the terminal-side device may stop detecting the wake-up signal indication information at a time 2 before the DRX on duration. Duration between the time 2 and the start time of the DRX on duration is a first offset, and may also be referred to as a minimum offset (minimum offset), which is denoted as M_OF in FIG. 3. The first offset may be a time that is required for the terminal-side device to switch from a dormancy state to a wake-up state and that is reported by the terminal-side device to the network. The terminal-side device does not need to detect DCI in a specific DCI format within the first offset. That is, the terminal-side device does not detect DCI in a specific DCI format within the first offset.

The first offset may also be referred to as a minimum gap (minimum gap) or the like. A name of the first offset is not limited in this embodiment of this application.

### 3. Dormancy indication (dormancy indication) information

In a carrier aggregation technology, a dormancy mechanism of a secondary carrier (secondary cell, SCell) is defined in 3GPP. When the SCell is indicated as a dormancy state, a terminal-side device switches from a current downlink active bandwidth part (bandwidth part, BWP) to a dormant BWP in the SCell. The dormant BWP may be a BWP for which no PDCCH search space is configured, or a BWP on which PDCCH monitoring does not need to be performed. Because the terminal-side device may not perform PDCCH detection on the dormant BWP, power consumption is reduced. A network-side device may indicate, by using the dormancy indication information, the terminal-side device to perform BWP switching. It should be noted that the network-side device may indicate, by using the dormancy indication information, the terminal-side device to switch from a non-dormant (non dormancy) BWP to a dormant BWP, or may switch from a dormant BWP to a specific non-dormant BWP.

For example, the network-side device configures four SCells. The four SCells are divided into two groups: an SCell group 1 and an SCell group 2. The dormancy indication information has two bits, which respectively correspond to one SCell group. The network-side device sends DCI including the dormancy indication information to the terminal-side device, and values of the two bits corresponding to the dormancy indication information is "10". In this case, an SCell in the SCell group 1 is in a non-dormancy state, the terminal-side device monitors a PDCCH and performs data transmission in the SCell in the SCell group 1; and an SCell in the SCell group 2 is in a dormancy state, the terminal-side device works in a dormant BWP and does not monitor the PDCCH.

A time required by the terminal-side device to perform BWP switching may be referred to as a BWP switching delay (BWP switching delay). The BWP switching delay includes PDCCH demodulation and DCI decoding time, baseband processing time (such as parameter calculation), radio frequency transition time (RF transition time), and the like. The BWP switching delay is reported by the terminal-side device to the network-side device based on a capability of the terminal-side device.

Currently, when the network-side device simultaneously sends wake-up signal indication information and dormancy indication information by using one piece of DCI, there is no specific solution to how to agree on a start time of a BWP switching delay. Embodiments of this application provide a method, so that the terminal-side device and the network-side device to determine a same start time of the BWP switching delay, to avoid that the terminal-side device loses data because the network-side device sends the data to the terminal-side device during BWP switching.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It should be noted that before the method provided in this embodiment of this application is implemented, the following steps may be performed between the terminal-side device and the network-side device:
Step 1: The terminal-side device reports capability information of the terminal-side device by using signaling. The capability information includes but is not limited to a first offset and a BWP switching delay.

The first offset may be used for determining, before a start time of DRX on duration, a latest time at which the terminal-side device stops detecting DCI in a specific DCI format. The DCI in the specific DCI format carries wake-up signal indication information, and may further carry dormancy indication information. Specifically, a time at which the terminal-side device stops detecting the DCI in the specific DCI format is before the start time of the DRX on duration, and there is at least the first offset between the time at which the terminal-side device stops detecting the DCI in the specific DCI format and the start time of the DRX on duration.

Without loss of generality, the specific DCI format is configured by a network or preset.

In an example, the specific DCI format is a DCI format 2_6 in an NR system.

The BWP switching delay indicates duration required by the terminal-side device to perform BWP switching in BWPs of different subcarriers. For example, a correspondence that is between a BWP switching delay and a subcarrier spacing and that is reported by the terminal-side device may be shown in Table 1.

**Table 1**

| Subcarrier spacing | BWP switching delay (a slot) |
|---|---|
| 15 KHz | 1 |
| 30 KHz | 2 |
| 60 KHz | 3 |
| 120 KHz | 6 |

It should be noted that Table 1 is merely an example, and the correspondence between the BWP switching delay and the subcarrier spacing may alternatively be in another form. Examples are not described one by one herein.

The capability information reported by the terminal side may further include other information. Examples are not described one by one herein.

A first minimum gap and the BWP switching delay may be reported in same signaling or different signaling.

Step 2: The network-side device sends configuration information to the terminal-side device.

The configuration information includes configuration information of the DCI in the specific DCI format, and includes but is not limited to information such as a configuration of a search space set (Search space set) associated with the DCI in the specific DCI format, a power saving offset (PS_offset), and a PS-RNTI scrambling the DCI.

The configuration of the search space set associated with the DCI in the specific DCI format may indicate a location of a monitoring occasion (monitoring occasion) corresponding to the DCI, and the terminal-side device may detect the DCI in the specific DCI format on each monitoring occasion. The power saving offset may be used for determining a start time at which the DCI in the specific DCI format is detected. Specifically, the start time at which the terminal-side device detects the DCI in the specific DCI format is earlier than the start time of the DRX on duration, and duration between the start time at which the terminal-side device detects the DCI in the specific DCI format and the start time of the DRX on duration is the power saving offset. The terminal-side device may determine, based on a specific RNTI, whether the detected DCI is DCI in the specific DCI format.

In an example, the specific RNTI is a PS-RNTI, and the specific DCI format is a DCI format 2_6 in an NR system.

The configuration information sent by the network-side device may further include other information. Examples are not described one by one herein.

The terminal-side device may detect the DCI in the specific DCI format before the DRX on duration based on the foregoing configuration information. Details are separately described below.

### Embodiment 1

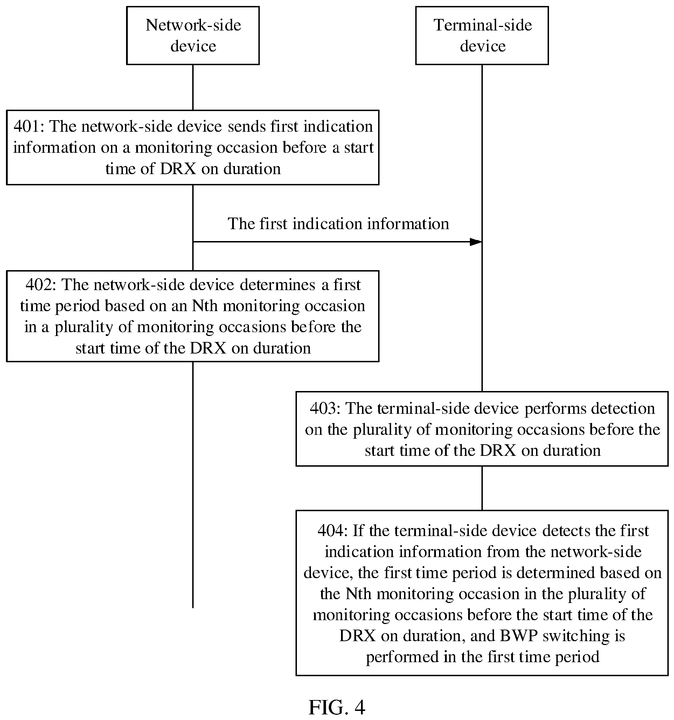

Embodiment 1 mainly describes how to determine a start time of a BWP switching delay. Specifically, FIG. 4 is a schematic flowchart of a detection method according to an embodiment of this application. The method includes the following steps.

Step 401: A network-side device sends first indication information on a monitoring occasion before a start time of DRX on duration.

The first indication information may be the dormancy indication information described above, and the first indication information indicates a terminal-side device to perform BWP switching.

It should be noted that technical features such as the first indication information is described in detail below.

Step 402: The network-side device determines a first time period based on an N^{th} monitoring occasion in a plurality of monitoring occasions before the start time of the DRX on duration.

The first time period is a time period in which the terminal-side device is allowed to perform BWP switching.

The plurality of monitoring occasions fall within a first time to a second time, and specific content of the first time and the second time is described below.

In this embodiment of this application, N is an integer greater than 0. The N^{th} monitoring occasion may be a first monitoring occasion in the plurality of monitoring occasions, or may be a last monitoring occasion in the plurality of monitoring occasions. This is not limited in this embodiment of this application.

In an example, in a design in this embodiment of this application, the first time period is determined based on the last monitoring occasion in the plurality of monitoring occasions.

Step 403: The terminal-side device performs detection on the plurality of monitoring occasions before the start time of the DRX on duration.

The detection means that the terminal-side device detects a candidate PDCCH based on a specific DCI format. The specific DCI format may exist in the candidate PDCCH, and the terminal-side device needs to determine, through detection, whether the specific DCI format exists in the candidate PDCCH.

It should be noted that the terminal-side device detects the specific DCI format on the plurality of monitoring occasions. In this embodiment of this application, the specific DCI format may be DCI in a DCI format 2_6.

Step 404: If the terminal-side device detects the first indication information from the network-side device, the first time period is determined based on the N^{th} monitoring occasion in the plurality of monitoring occasions before the start time of the DRX on duration, and BWP switching is performed in the first time period.

It should be noted that in step 401 and step 404, the first indication information may indicate the terminal-side device to switch from a non-dormant BWP to a dormant BWP, or may indicate the terminal-side device to switch from a dormant BWP to a specific non-dormant BWP. This is specifically determined based on an actual situation. The dormant BWP may be a BWP for which no PDCCH search space is configured or a BWP configured to not receive or detect a PDCCH. The non-dormant BWP may be another BWP configured other than the dormant BWP, for example, a BWP for which a PDCCH search space is configured or a BWP configured to detect a PDCCH. The terminal-side device may no longer detect the PDCCH in the dormant BWP. This can reduce power consumption.

It should be noted that the first indication information is sent by using DCI in a specific DCI format, for example, the DCI format 2_6. The DCI may further carry second indication information, and the second indication information may be the wake-up indication information described above. The second indication information indicates whether the terminal-side device wakes up at the start time of the DRX on duration. The wake-up means that an on duration timer is started at the start time of the DRX on duration.

For example, the monitoring occasion is a time unit in which the terminal-side device detects the candidate PDCCH based on the specific DCI format. The network-side device may indicate, to the terminal-side device by using configuration information, a monitoring occasion corresponding to a search space set (Search Space Set) for monitoring the specific DCI format. To enable the terminal-side device to detect the DCI in the specific DCI format, when sending the DCI in the specific DCI format, the network-side device also sends the DCI on the corresponding monitoring occasion.

In step 402 and step 403, duration of the first time period may be equal to a BWP switching delay determined by the terminal-side device. Further, when the first indication information indicates the terminal-side device to perform BWP switching, the first indication information may indicate the terminal-side device to perform BWP switching in at least one cell, and the at least one cell may belong to one secondary cell group (SCell group). In this case, the duration of the first time period may be equal to the BWP switching delay that is corresponding to the at least one cell and that is indicated by the first indication information.

The BWP switching delay corresponding to the at least one cell may be determined based on a subcarrier spacing of a downlink subcarrier included in the at least one cell. For example, with reference to Table 1, when the subcarrier spacing of the downlink carrier included in the at least one cell is 30 KHz, the BWP switching delay corresponding to the at least one cell may be two slots. Correspondingly, the duration of the first time period is equal to two slots.

In this embodiment of this application, a start time of the first time period may be an end time of a last time unit included in the N^{th} monitoring occasion in the plurality of monitoring occasions. The time unit may be a slot (slot) in an NR system, or may be a subframe in an LTE system, or the like. This is not limited in this embodiment of this application.

Further, with reference to the foregoing description, the duration of the first time period is equal to the BWP switching delay determined by the terminal-side device, and the end time of the last time unit included in the N^{th} monitoring occasion in the plurality of monitoring occasions may indicate a start time of the BWP switching delay.

Without loss of generality, in this embodiment of this application, the DCI format 2_6 is used as an example of the specific DCI format for description. A specific format of the specific DCI format is not limited in this embodiment of this application.

In this embodiment of this application, both the first time and the second time are before the start time of the DRX on duration, and the second time is between the first time and the start time of the DRX on duration. The first time is a time at which the terminal-side device starts to detect the DCI in the DCI format 2_6 before the start time of the DRX on duration. Correspondingly, after the second time, that the terminal does not need to detect the PDCCH candidate corresponding to the DCI format 2_6 may be understood as that the terminal-side device does not detect the DCI in the DCI format 2_6 between the second time and the start time of the DRX on duration.

In this embodiment of this application, the detecting the DCI in the DCI format 2_6 may be detecting the candidate PDCCH corresponding to the DCI in the DCI format 2_6.

Further, duration between the first time and the start time of the DRX on duration is configured by the network-side device. For example, the duration between the first time and the start time of the DRX on duration is configured by using the power saving offset (PS_offset) parameter described above.

The power saving offset may be used for determining a start time for detecting the DCI in the DCI format 2_6. Specifically, the start time for detecting the DCI in the DCI format 2_6 by the terminal-side device is earlier than the start time of the DRX on duration, and duration between the start time for detecting the DCI in the DCI format 2_6 by the terminal-side device and the start time of the DRX on duration is the power saving offset.

Further, in a possible implementation, the second time may be determined based on a method in a manner in a conventional technology. That is, duration between the second time and the start time of the DRX on duration may be equal to a first offset determined and reported by the terminal-side device.

In another possible implementation, the second time may be further determined in the manner in Embodiment 2. For details, refer to the following description in Embodiment 2.

Further, if the terminal-side device wakes up at the start time of the DRX on duration, it is better to complete BWP switching before the start time of the DRX on duration. Based on this, in this embodiment of this application, if the start time of the DRX on duration falls within the first time period, in a possible implementation, the start time of the DRX on duration may be postponed to an end time of the first time period. In another possible implementation, the start time of the DRX on duration may be kept unchanged. In this case, the first time period overlaps the DRX on duration. A specific manner may be determined based on an actual situation.

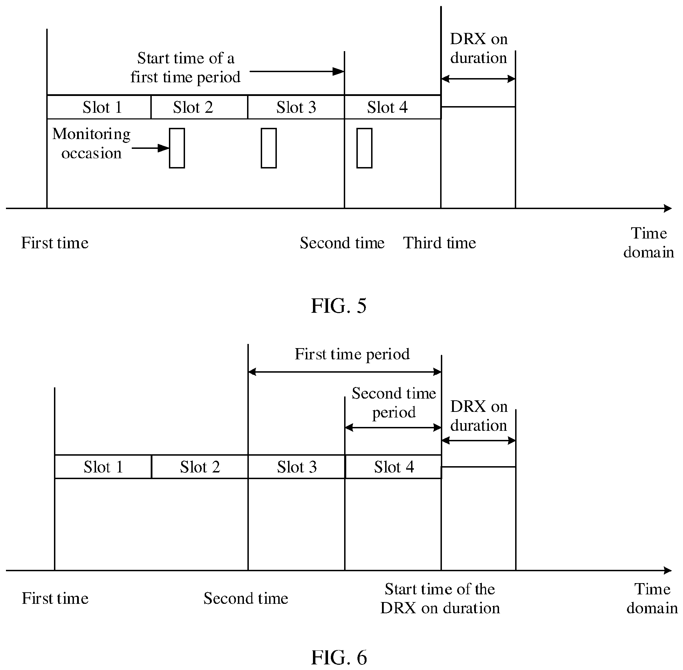

With reference to FIG. 4, FIG. 5 is a schematic diagram of a time sequence according to an embodiment of this application. In FIG. 5, an example in which the time unit is a slot in an NR system is used for description. The power saving offset configured by the network-side device includes four slots (slot), and the terminal-side device may start to detect the specific DCI format from the first time that is before the start time of the DRX on duration and that has an interval of four slots from the start time of the DRX on duration. The first offset determined by the terminal-side device includes one slot, the terminal-side device stops detection at the second time at the latest that is before the start time of the DRX on duration and that has an interval of one slot from the start time of the DRX on duration, and the terminal-side device may stop detecting the specific DCI format after the second time that is before the start time of the DRX on duration and that has an interval of one slot from the start time of the DRX on duration.

It can be learned with reference to the foregoing description that three slots are included within the first time to the second time, and one slot is included between the second time and the start time (a third time) of the DRX on duration. It is assumed that there are two monitoring occasions within the first time to the second time, which are respectively located in a slot 2 and a slot 3. The first offset also includes one monitoring occasion, and is located in a slot 4. In FIG. 5, an example in which the DCI in the DCI format 2_6 sent by the network-side device exists on each monitoring occasion is used for description. The DCI includes the first indication information and the second indication information.

In FIG. 5, the terminal-side device detects the DCI in the DCI format 2_6 within the first time to the second time, and the terminal-side device does not detect the DCI between the second time and the third time.

That the terminal-side device detects the DCI format 2_6 within the first time to the second time means that the terminal-side device monitors the candidate PDCCH based on the DCI format 2_6 on the plurality of monitoring occasions within the first time to the second time.

It is assumed that the N^{th} monitoring occasion is the last monitoring occasion within the first time to the second time. If the terminal-side device detects the DCI in the DCI format 2_6 on the first monitoring occasion within the first time to the second time, an end time of a last slot included in the last monitoring occasion within the first time to the second time may be used as the start time of the first time period. It can be learned from FIG. 5 that the terminal-side device detects the DCI in the slot 2, and the start time of the first time period is an end time of the slot 3 (the slot included in the last monitoring occasion). The terminal-side device performs BWP switching in the first time period.

It should be noted that, regardless of a monitoring occasion on which the terminal-side device detects the first indication information, the terminal-side device performs BWP switching based on an indication of the first indication information in the first time period.

Further, if the terminal-side device determines that the DCI in the DCI format 2_6 is detected, the DCI includes the second indication information of the terminal-side device, and the second indication information indicates the terminal-side device to wake up at the start time of the DRX on duration, the terminal-side device may start a timer drx-onDurationTimer. The "wake-up" means that the terminal-side device starts the timer drx-onDurationTimer at a preset or preconfigured location. The preset or preconfigured location may be determined based on a configuration parameter of a network. If the terminal-side device receives a PDCCH indicating new downlink or uplink data transmission within the DRX on duration, the terminal-side device starts (or restarts) the timer drx-InactivityTimer. The terminal-side device is always in a DRX active state until the timer drx-InactivityTimer timer expires, or the terminal-side device receives an instruction for instructing the timer drx-InactivityTimer to be stopped in advance.

The foregoing Embodiment 1 describes how to determine the start time of the time period in which the terminal-side device is allowed to perform BWP switching. The following describes how to determine a time at which the terminal-side device stops detecting the DCI, that is, how to determine the second time. It should be noted that Embodiment 2 may also be applied to Embodiment 1, that is, Embodiment 2 and Embodiment 1 may be implemented together, or may be implemented separately and independently.

### Embodiment 2

Embodiment 2 specifically includes the following procedure.

Step 1: A terminal-side device starts to detect DCI at a first time before a start time of DRX on duration.

Duration between the first time and the start time of the DRX on duration is configured by a network-side device. For details, refer to the foregoing descriptions. The DCI includes first indication information and second indication information, and a format of the DCI may be a DCI format 2_6. The first indication information indicates the terminal-side device to perform BWP switching. The second indication information indicates whether the terminal-side device wakes up at the start time of the DRX on duration. The "wake-up" means that the terminal-side device starts a timer drx-onDurationTimer at a preset location. For specific content of the first indication information and the second indication information, refer to the foregoing descriptions. Details are not described herein again.

Step 2: The terminal-side device stops detecting the DCI before a second time. The second time is before the start time of the DRX on duration.

The terminal-side device stops detection at the second time before the start time of the DRX on duration at the latest. The second time is determined based on a second time period and a first time period, and the first time period is a time period in which the terminal-side device is allowed to perform BWP switching. For specific content of the first time period, refer to the foregoing descriptions. Details are not described herein again.

In this embodiment of this application, the second time period is a first offset reported by the terminal-side device, and the terminal-side device does not need to detect the DCI in the second time period.

In this embodiment of this application, that the terminal-side device does not need to detect the DCI in the second time period means that the network-side device considers that the terminal-side device does not detect the DCI in the second time period.

Further, in this embodiment of this application, duration between the second time and the start time of the DRX on duration may be a maximum value between duration of the second time period and duration of the first time period.

For example, FIG. 6 is a schematic diagram of a time sequence according to an embodiment of this application. In FIG. 6, an example in which the time unit is a slot in an NR system is used for description. A power saving offset configured by the network-side device includes four slots (slot), and the terminal-side device may start detection from the first time that is before the start time of the DRX on duration and that has an interval of four slots from the start time of the DRX on duration. The first offset determined by the terminal-side device includes one slot, and the second time period may include one slot. It is assumed that the first time period includes two slots, the duration between the second time and the start time of the DRX on duration may be two slots. That is, the terminal-side device may stop detection at the second time at the latest that is before the start time of the DRX on duration and that has an interval of two slots from the start time of the DRX on duration.

With reference to the foregoing description, it can be learned that in FIG. 6, the terminal-side device detects DCI in three slots included within the first time to the second time, and the terminal-side device does not detect DCI in two slots included within the second time to a third time.

Further, the duration of the first time period is a BWP switching delay determined by the terminal-side device. If the first indication information indicates the terminal-side device to perform BWP switching in at least one cell, and the at least one cell may belong to one secondary cell group (Scell group). In this case, the duration of the first time period may be determined based on a BWP switching delay corresponding to a minimum subcarrier spacing in all downlink carriers included in the at least one cell. For example, the duration of the first time period may be equal to the BWP switching delay corresponding to the minimum subcarrier spacing in all the downlink carriers included in the at least one cell.

For example, with reference to Table 1, when the at least one cell includes a cell 1 and a cell 2, a subcarrier spacing of a downlink carrier included in the cell 1 is 30 KHz, and a subcarrier spacing of a downlink carrier included in the cell 2 is 60 KHz, the duration of the first time period may be equal to a BWP switching delay corresponding to a subcarrier spacing of 30 KHz, that is, includes two slots.

Further, the duration of the second time period may alternatively be determined based on a maximum value of absolute times of first offsets corresponding to all the downlink carriers in all the downlink carriers included in the at least one cell.

Further, the duration of the second time period may alternatively be based on a first offset corresponding to the minimum subcarrier spacing corresponding to all the downlink carriers in all the downlink carriers included in the at least one cell.

Further, the duration of the second time period may alternatively be based on a first offset corresponding to a maximum subcarrier spacing corresponding to all the downlink carriers in all the downlink carriers included in the at least one cell.

For example, a correspondence that is between the first offset and the subcarrier spacing and that is determined by the terminal-side device may be shown in Table 2.

**Table 2**

| Subcarrier spacing | First offset (a slot) |
|---|---|
| 15 KHz | 1 |
| 30 KHz | 1 |
| 60 KHz | 2 |
| 120 KHz | 3 |

It should be noted that Table 2 is merely an example, and the correspondence between the first offset and the subcarrier spacing may alternatively be in another form. Examples are not described one by one herein.

With reference to Table 2, when the at least one cell includes the cell 1 and the cell 2, the subcarrier spacing of the downlink carrier included in the cell 1 is 30 KHz, and the subcarrier spacing of the downlink carrier included in the cell 2 is 60 KHz, the duration of the second time period may be equal to the BWP switching delay corresponding to the subcarrier spacing of 30 KHz, that is, includes one slot.

Further, in this embodiment of this application, at least one monitoring occasion may be included within the first time to the second time.

Further, when the terminal-side device is configured by the network-device to include only the second indication information of the terminal-side device but not the first indication information of the terminal-side device in a detected specific DCI format, the terminal-side device determines the second time based on the first time period. When the terminal-side device is configured by the network device to include the first indication information and the second indication information of the terminal-side device in the detected specific DCI format, the terminal-side device determines the second time based on the first time period and the second time period, typically, determining the second time based on a maximum value between the first time period and the second time period. A manner in which the network device determines the second time is corresponding to a manner in which the terminal-side device determines the second time. Details are not described again.

Further, if no monitoring occasion or no valid monitoring occasion is included within the first time to the second time, the terminal-side device performs, within the DRX on duration, communication by using a BWP for which a PDCCH search space is configured.

Specifically, if the terminal-side device works in a dormant BWP before the start time of the DRX on duration, that is, the terminal-side device performs communication by using a BWP for which no PDCCH search space is configured, the terminal-side device is switched to a non-dormant BWP before the start time of the DRX on duration, that is, switched to the BWP for which the PDCCH search space is configured.

In this embodiment of this application, the first time and the second time may alternatively be kept unchanged from definitions in the conventional technology. To be specific, the first time is determined based on the power saving offset (PS_offset) configured by the network-side device, and the second time is determined based on the first offset determined by the terminal-side device. However, if the first indication information is detected within a BWP switching delay, the first indication information is ignored. That is, BWP switching is not performed based on the first indication information. Details are described below.

### Embodiment 3

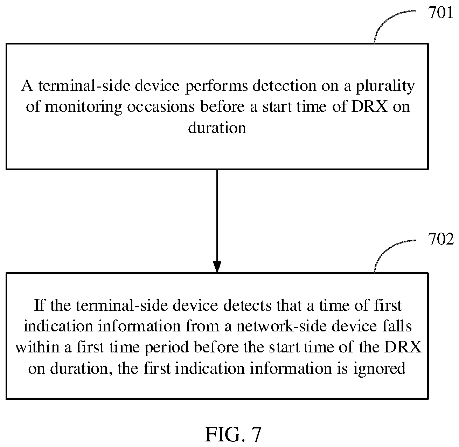

FIG. 7 is a schematic flowchart of a detection method according to an embodiment of this application. The method includes the following steps.

Step 701: A terminal-side device performs detection on a plurality of monitoring occasions before a start time of DRX on duration.

The detection means that the terminal-side device detects a candidate PDCCH based on a specific DCI format. The specific DCI format may exist in the candidate PDCCH, and the terminal-side device needs to determine, through detection, whether the specific DCI format exists in the candidate PDCCH. For the monitoring occasion, refer to the foregoing description. Details are not described herein again.

Step 702: If the terminal-side device detects that a time of first indication information from a network-side device falls within a first time period before the start time of the DRX on duration, the first indication information is ignored.

Correspondingly, when the terminal-side device receives second indication information in the first time period, the second indication information is valid, and the terminal-side device determines, based on the second indication information, whether to perform a wake-up operation.

Optionally, step 702 may be further replaced with the following step.

If the terminal-side device detects that an end time of a monitoring occasion of the first indication information from the network-side device falls within the first time period before the start time of the DRX on duration, the first indication information is ignored. The end time of the monitoring occasion may be defined as an end time of a time unit in which the monitoring occasion is located.

The first indication information indicates the terminal-side device to perform BWP switching, and the first time period is a time period in which the terminal-side device is allowed to perform BWP switching.

Correspondingly, if the time at which the terminal-side device detects the first indication information, or the end time of the monitoring occasion at which the terminal-side device detects the first indication information is between a first time and a start time of the first time period (which may include the start time of the first time period), BWP switching may be performed based on the first indication information. The end time of the monitoring occasion may be defined as an end time of a time unit in which the monitoring occasion is located.

Optionally, the terminal-side device performs BWP switching from the end time of the monitoring occasion at which the first indication information is detected to the start time of the DRX on duration. The terminal-side device may use the end time of the monitoring occasion at which the first indication information is detected as a start time of BWP switching. Alternatively, the terminal-side device may use the start time of the first time period as the start time of BWP switching. Alternatively, the terminal-side device may use an end time of a last monitoring occasion of the first indication information as the start time of BWP switching, as described in Embodiment 1.

It should be noted that the first indication information is sent by using DCI in a DCI format 2_6. The DCI may further carry second indication information, and the second indication information may be the wake-up indication information described above. The second indication information indicates whether the terminal-side device wakes up at the start time of the DRX on duration.

The plurality of monitoring occasions fall within the first time to a second time. Both the first time and the second time are before the start time of the DRX on duration, and the second time is between the first time and the start time of the DRX on duration. The first time is a time at which the terminal-side device starts to detect the DCI in the DCI format 2_6 before the start time of the DRX on duration. Correspondingly, the second time is a time at which the terminal-side device stops detecting the DCI in the DCI format 2_6 at the latest. That is, the terminal-side device is not required to detect the DCI in the DCI format 2_6 between the second time and the start time of the DRX on duration.

Further, duration between the first time and the start time of the DRX on duration is configured by the network-side device. For example, the duration between the first time and the start time of the DRX on duration is configured by using the power saving offset (PS_offset) described above.

Duration between the second time and the start time of the DRX on duration may be equal to a first offset determined by the terminal-side device.

In this embodiment of this application, there may be an association relationship between the first time period and the first indication information. Specifically, the first indication information may indicate the terminal-side device to perform BWP switching in at least one cell, and the at least one cell may belong to one secondary cell group. Duration of the first time period may be equal to a BWP switching delay that is corresponding to the at least one cell and that is indicated by the first indication information.

Further, when the terminal-side device is configured by the network-device to include only the second indication information of the terminal-side device but not the first indication information of the terminal-side device in a detected specific DCI format, the terminal-side device detects the specific DCI format within the first time to the second time, and determines, based on the second indication information of DCI in the detected specific DCI format, whether to start a DRX on duration timer at a preset or preconfigured location. When the terminal-side device is configured by the network-device to include the first indication information and the second indication information of the terminal-side device in the detected specific DCI format, the terminal-side device detects the specific DCI format within the first time to the second time, determines, based on the second indication information of the DCI in the detected specific DCI format, whether to start the DRX on duration timer at the preset or preconfigured location, and performs BWP switching based on the first indication information of the DCI in the detected specific DCI format between the first time and the start time of the first time period. In this case, the first indication information that is of the DCI in the detected specific DCI format and that is after the start time of the first time period is ignored. That the first indication information is ignored means that the terminal-side device does not perform BWP switching based on the first indication information.

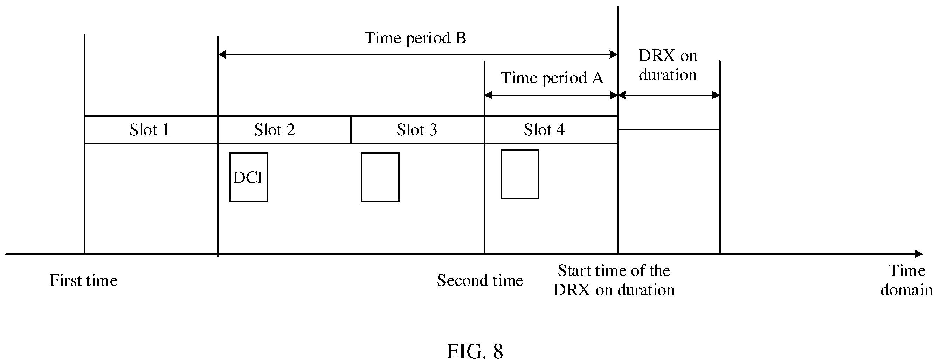

In FIG. 8, an example in which the time unit is a slot in an NR system is used for description. The terminal-side device may perform detection within the first time to the second time and before the start time of the DRX on duration. Four slots are included between the first time and the start time of the DRX on duration, and one slot is included between the second time and the start time of the DRX on duration. The first time to the second time includes three slots: a slot 1, a slot 2, and a slot 3.

The terminal-side device detects DCI in the slot 2 within the first time to the second time. The DCI includes two pieces of first indication information: indication information A and indication information B. The indication information A indicates the terminal-side device to perform BWP switching in a secondary cell group 1, and the indication information B indicates the terminal-side device to perform BWP switching in a secondary cell group 2.

A BWP switching delay corresponding to the secondary cell group 1 is one slot, and a BWP switching delay corresponding to the secondary cell group 2 is two slots. In other words, the first time period associated with the indication information A is a time period A and includes one slot. The first time period associated with the indication information B is a time period B, and includes three slots.

It can be learned from the foregoing description that the DCI detected by the terminal-side device is located in the first time period associated with the indication information B, and is located outside the first time period associated with the indication information A.

Because the DCI is located in the first time period associated with the indication information B, the terminal-side device may ignore the indication information B, that is, does not perform BWP switching in the secondary cell group 2. Correspondingly, the terminal-side device may perform BWP switching in the secondary cell group 1 based on the indication information A.

It should be noted that, in this embodiment of this application, that the terminal-side device ignores the first indication information means that the terminal-side device considers that the received first indication information is invalid, and does not perform a specific operation. Further, the ignoring the first indication information includes: The terminal-side device keeps a current BWP unchanged.

Further, if the terminal-side device does not detect the first indication information before the start time of the first time period, the following two cases exist when the start time of the DRX on duration is started.

Case 1: Communication is performed by using a BWP for which no PDCCH search space is configured.

In case 1, before the start time of the DRX on duration, the terminal-side device may switch to the BWP for which no PDCCH search space is configured, for example, switch to a first non-dormant BWP configured on a network side.

Case 2: A current BWP is used for communication.

In Case 2, before the start time of the DRX on duration, the terminal-side device keeps the current BWP unchanged.

Further, in this embodiment of this application, because the terminal-side device may ignore the first indication information in the first time period, in a first possible implementation, the network-side device may not send the first indication information in the first time period.

In a second possible implementation, a value of a bit corresponding to the first indication information in the first time period may be a preset value, for example, set to 0 or 1.

In a third possible implementation, a value of a bit corresponding to the first indication information in the first time period is the same as a value of a bit corresponding to the second indication information. This can improve DCI detection reliability of the DCI format 2_6.

In a fourth possible implementation, the first indication information in the first time period may indicate another function, for example, may indicate a minimum K0 (minimum K0) after the DRX on duration. The minimum K0 is a time interval between downlink scheduling DCI and a physical downlink shared channel (physical downlink shared channel, PDSCH) scheduled by the downlink scheduling DCI.

It should be noted that, as described above, the first indication information and the second indication information is sent by using same DCI, and the terminal-side device may determine, based on the second indication information, whether to wake up within the DRX on duration. If the second indication information indicates the terminal-side device to wake up at the start time of the DRX on duration, the terminal-side device may start the timer drx-onDurationTimer. For details, refer to descriptions in the conventional technology. Details are not described herein again.

Embodiments described in this specification may be independent solutions, or may be combined based on internal logic. All these solutions fall within the protection scope of this application.

It may be understood that, in the foregoing method embodiments, the methods and the operations implemented by the terminal-side device may alternatively be implemented by a component (for example, a chip or a circuit) used in the terminal-side device, and the methods and the operations implemented by the network-side device may alternatively be implemented by a component (for example, a chip or a circuit) used in the network-side device.

In the foregoing embodiments provided in this application, the methods provided in embodiments of this application are separately described from a perspective of interaction between devices. To implement functions in the methods provided in the foregoing embodiments of this application, the terminal-side device and the network-side device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, function modules in embodiments of this application may be integrated into one processor, or may exist alone physically, or two or more modules are integrated into one module. The integrated module may be implemented in a form of hardware, or may be implemented in a form of a software function module.

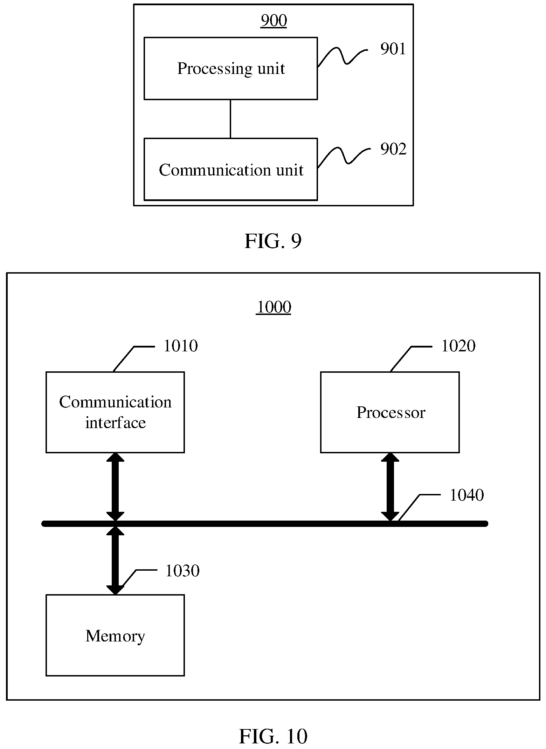

Same as the foregoing concept, as shown in FIG. 9, an embodiment of this application further provides an apparatus 900, configured to implement a function of the terminal-side device or the network-side device in the foregoing method. For example, the apparatus may be a software module or a chip system. In this embodiment of this application, the chip system may include a chip, or may include a chip and another discrete component. The apparatus 900 may include a processing unit 901 and a communication unit 902.

In this embodiment of this application, the communication unit may also be referred to as a transceiver unit, and may include a sending unit and/or a receiving unit, which are respectively configured to perform sending and receiving steps of the terminal-side device or the network-side device in the foregoing method embodiments.

Communication apparatuses provided in embodiments of this application are described in detail with reference to FIG. 9 and FIG. 10. It should be understood that descriptions of the apparatus embodiments correspond to the descriptions of the method embodiments. Therefore, for content that is not described in detail, refer to the foregoing method embodiments. For brevity, details are not described herein again.

In a possible design, the apparatus 900 may implement steps or procedures corresponding to the terminal-side device or the network-side device in the foregoing method embodiments. Description is given below.

The processing unit 901 may be configured to perform steps performed by the terminal-side device or the network-side device in the foregoing method embodiments, for example, determine the first time period based on the N^{th} monitoring occasion in the plurality of monitoring occasions before the start time of the DRX on duration, and perform BWP switching in the first time period. For details, refer to the foregoing description. Details are not described herein again.

The communication unit 902 may be configured to perform the steps performed by the terminal-side device or the network-side device in the foregoing method embodiments, for example, perform detection on the plurality of monitoring occasions before the start time of the discontinuous reception DRX on duration. For details, refer to the foregoing descriptions. Details are not described herein again.

FIG. 10 shows an apparatus 1000 according to an embodiment of this application. The apparatus shown in FIG. 10 may be an implementation of a hardware circuit of the apparatus shown in FIG. 9. The communication apparatus is applicable to the flowchart shown above, and performs a function of the terminal-side device or the network-side device in the foregoing method embodiments. For ease of description, FIG. 10 shows only main components of the communication apparatus.

The apparatus 1000 shown in FIG. 10 includes at least one processor 1020, configured to implement any method provided in embodiments of this application.

The apparatus 1000 may further include at least one memory 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

In an implementation process, steps in the foregoing methods can be implemented by using a hardware integrated logical circuit in the processor, or by using instructions in a form of software. The steps of the methods disclosed with reference to embodiments of this application may be performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in this embodiment of this application may be an integrated circuit chip and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processing circuit (digital signal processor, DSP), an application-specific integrated chip (application specific integrated circuit, ASIC), a field programmable gate array (field programmable gate array, FPGA), another programmable logic device, a discrete gate or transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. It should be noted that the memory in the system and the method described in this specification is intended to include, but not limited to, these memories and any memory of another proper type.

The apparatus 1000 may further include a communication interface 1010, configured to communicate with another device through a transmission medium, so that an apparatus in the apparatus 1000 can communicate with the another device. In embodiments of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver integrating receiving and sending functions, or may be a communication interface.

The apparatus 1000 may further include a communication line 1040. The communication interface 1010, the processor 1020, and the memory 1030 may be connected to each other through the communication line 1040. The communication line 1040 may be a peripheral component interconnect (peripheral component interconnect, PCI for short) bus, an extended industry standard architecture (extended industry standard architecture, EISA for short) bus, or the like. The communication line 1040 may be classified into an address bus, a data bus, a control bus, and the like. For ease of representation, only one thick line is for representing the bus in FIG. 10, but this does not mean that there is only one bus or only one type of bus.

For example, when the apparatus 1000 implements the functions of the terminal-side device in the procedure in the foregoing embodiment,
the processor 1020 may be configured to perform steps performed by the terminal-side device or the network-side device in the foregoing method embodiments, for example, determine the first time period based on the N^{th} monitoring occasion in the plurality of monitoring occasions before the start time of the DRX on duration, and perform BWP switching in the first time period. For details, refer to the foregoing description. Details are not described herein again.

The communication interface 1010 may be configured to perform the steps performed by the terminal-side device or the network-side device in the foregoing method embodiments, for example, perform detection on the plurality of monitoring occasions before the start time of the discontinuous reception DRX on duration. For details, refer to the foregoing descriptions. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clearly that, a person skilled in the art can make various modifications and variations to this application without departing from the scope of the claims. This application is intended to cover these modifications and variations of this application provided that they fall within the scope of protection defined by the following claims.

## Claims

1. A detection method, comprising:
performing (403), by a terminal-side device, detection on a plurality of monitoring occasions before a start time of discontinuous reception, DRX, on duration;
if the terminal-side device detects first indication information from a network-side device, determining (404) a first time period based on an N^{th} monitoring occasion in the plurality of monitoring occasions before the start time of the DRX on duration, and performing (404) bandwidth part, BWP, switching in the first time period; and
the first indication information indicates the terminal-side device to perform BWP switching, and N is an integer greater than 0,
wherein the plurality of monitoring occasions fall within a first time to a second time; and
the first time is before the start time of the DRX on duration, and duration between the first time and the start time of the DRX on duration is configured by the network-side device; and the second time is before the start time of the DRX on duration,
wherein the second time is determined based on a second time period and the first time period, the second time period is a time period in which the terminal-side device does not detect, before the start time of the DRX on duration, downlink control information, DCI, comprising second indication information, and the second indication information indicates whether the terminal-side device wakes up at the start time of the DRX on duration.

2. The method according to claim 1, wherein a start time of the first time period is an end time of a last time unit comprised in the N^{th} monitoring occasion before the start time of the DRX on duration.

3. The method according to claim 1 or 2, wherein duration of the first time period is equal to a BWP switching delay determined by the terminal-side device.

4. The method according to any one of claims 1-3, wherein the method further comprises:
the first indication information is carried in the DCI, and the DCI further comprises the second indication information.

5. The method according to any one of claims 1-3, wherein duration between the second time and the start time of the DRX on duration is a maximum value between duration of the second time period and the duration of the first time period.

6. A detection method, comprising:
sending (401), by a network-side device, first indication information on a monitoring occasion before a start time of discontinuous reception, DRX, on duration, wherein the first indication information indicates a terminal-side device to perform bandwidth part, BWP, switching; and
determining (402), by the network-side device, a first time period based on an N^{th} monitoring occasion in a plurality of monitoring occasions before the start time of the DRX on duration, wherein the first time period is a time period in which the terminal-side device is allowed to perform BWP switching,
wherein the plurality of monitoring occasions fall within a first time to a second time; and
the first time is before the start time of the DRX on duration, and duration between the first time and the start time of the DRX on duration is configured by the network-side device; and the second time is before the start time of the DRX on duration,
wherein the second time is determined based on a second time period and the first time period, the second time period is a time period in which the terminal-side device does not detect, before the start time of the DRX on duration, downlink control information, DCI, comprising second indication information, and the second indication information indicates whether the terminal-side device wakes up at the start time of the DRX on duration.

7. The method according to claim 6, wherein a start time of the first time period is an end time of a last time unit comprised in the N^{th} monitoring occasion before the start time of the DRX on duration.

8. The method according to claim 6, wherein duration of the first time period is equal to a BWP switching delay determined by the terminal-side device.

9. A communication apparatus, configured to perform the method according to any one of claims 1 to 5 or 6 to 8.

10. A computer-readable storage medium storing instructions which, when executed by a computer, cause the computer to perform the method of any one of claims 1 to 5 or 6 to 8.

11. A chip, comprising a processor coupled to a memory storing instructions which, when executed by the processor, cause the chip to perform the method of any one of claims 1 to 5 or 6 to 8.

12. A computer program product comprising instructions which, when the computer program is executed by a computer, cause the computer to perform the method of any one of claims 1 to 5 or 6 to 8.

## Patentansprüche

1. Detektionsverfahren, umfassend:
Durchführen (403) einer Detektion durch eine endgeräteseitige Einrichtung bei einer Vielzahl von Überwachungsereignissen vor einem Startzeitpunkt einer Einschaltdauer eines diskontinuierlichen Empfangs (DRX);
wenn die endgeräteseitige Einrichtung erste Anzeigeinformationen von einer netzwerkseitigen Einrichtung detektiert, Bestimmen (404) eines ersten Zeitraums basierend auf einem N-ten Überwachungsereignis in der Vielzahl von Überwachungsereignissen vor dem Startzeitpunkt der DRX-Einschaltdauer und Durchführen (404) eines Umschaltens eines Bandbreitenteils (BWP) in dem ersten Zeitraum; und
wobei die ersten Anzeigeinformationen der endgeräteseitigen Einrichtung anzeigen, das BWP-Umschalten durchzuführen, und N eine ganze Zahl größer als 0 ist,
wobei die Vielzahl von Überwachungsereignissen innerhalb eines ersten Zeitpunkts bis zweiten Zeitpunkts fallen; und
der erste Zeitpunkt vor dem Startzeitpunkt der DRX-Einschaltdauer ist und eine Dauer zwischen dem ersten Zeitpunkt und dem Startzeitpunkt der DRX-Einschaltdauer von der netzwerkseitigen Einrichtung konfiguriert ist; und der zweite Zeitpunkt vor dem Startzeitpunkt der DRX-Einschaltdauer ist,
wobei der zweite Zeitpunkt basierend auf einem zweiten Zeitraum und dem ersten Zeitraum bestimmt wird, wobei der zweite Zeitraum ein Zeitraum ist, in dem die endgeräteseitige Einrichtung vor dem Startzeitpunkt der DRX-Einschaltdauer keine Downlink-Steuerinformationen (DCI) detektiert,
umfassend zweite Anzeigeinformationen, und die zweiten Anzeigeinformationen anzeigen, ob die endgeräteseitige Einrichtung zu dem Startzeitpunkt der DRX-Einschaltdauer aufwacht.

2. Verfahren nach Anspruch 1, wobei ein Startzeitpunkt des ersten Zeitraums ein Endzeitpunkt einer letzten Zeiteinheit ist, die in dem N-ten Überwachungsereignis vor dem Startzeitpunkt der DRX-Einschaltdauer beinhaltet ist.

3. Verfahren nach Anspruch 1 oder 2, wobei eine Dauer des ersten Zeitraums gleich einer BWP-Umschaltverzögerung ist, die durch die endgeräteseitige Einrichtung bestimmt wird.

4. Verfahren nach einem der Ansprüche 1-3, wobei das Verfahren ferner Folgendes umfasst:
die ersten Anzeigeinformationen sind in den DCI enthalten und die DCI umfassen ferner die zweiten Anzeigeinformationen.

5. Verfahren nach einem der Ansprüche 1-3, wobei eine Dauer zwischen dem zweiten Zeitpunkt und dem Startzeitpunkt der DRX-Dauer ein Maximalwert zwischen einer Dauer des zweiten Zeitraums und der Dauer des ersten Zeitraums ist.

6. Detektionsverfahren, umfassend:
Senden (401) erster Anzeigeinformationen durch eine netzwerkseitige Einrichtung bei einem Überwachungsereignissen vor einem Startzeitpunkt einer Einschaltdauer eines diskontinuierlichen Empfangs (DRX), wobei die ersten Anzeigeinformationen einer endgeräteseitigen Einrichtung anzeigen, ein Umschalten eines Bandbreitenteils (BWP) durchzuführen; und
Bestimmen (402) eines ersten Zeitraums durch die netzwerkseitige Einrichtung basierend auf einem N-ten Überwachungsereignis in einer Vielzahl von Überwachungsereignissen vor dem Startzeitpunkt der DRX-Einschaltdauer, wobei der erste Zeitraum ein Zeitraum ist, in dem der endgeräteseitigen Einrichtung ermöglicht wird, ein BWP-Umschalten durchzuführen,
wobei die Vielzahl von Überwachungsereignissen innerhalb eines ersten Zeitpunkts bis zweiten Zeitpunkts fallen; und
der erste Zeitpunkt vor dem Startzeitpunkt der DRX-Einschaltdauer ist und eine Dauer zwischen dem ersten Zeitpunkt und dem Startzeitpunkt der DRX-Einschaltdauer von der netzwerkseitigen Einrichtung konfiguriert ist; und der zweite Zeitpunkt vor dem Startzeitpunkt der DRX-Einschaltdauer ist,
wobei der zweite Zeitpunkt basierend auf einem zweiten Zeitraum und dem ersten Zeitraum bestimmt wird, wobei der zweite Zeitraum ein Zeitraum ist, in dem die endgeräteseitige Einrichtung vor dem Startzeitpunkt der DRX-Einschaltdauer keine Downlink-Steuerinformationen (DCI) detektiert,
umfassend zweite Anzeigeinformationen, und die zweiten Anzeigeinformationen anzeigen, ob die endgeräteseitige Einrichtung zu dem Startzeitpunkt der DRX-Einschaltdauer aufwacht.

7. Verfahren nach Anspruch 6, wobei ein Startzeitpunkt des ersten Zeitraums ein Endzeitpunkt einer letzten Zeiteinheit ist, die in dem N-ten Überwachungsereignis vor dem Startzeitpunkt der DRX-Einschaltdauer beinhaltet ist.

8. Verfahren nach Anspruch 6, wobei eine Dauer des ersten Zeitraums gleich einer BWP-Umschaltverzögerung ist, die durch die endgeräteseitige Einrichtung bestimmt wird.

9. Kommunikationsvorrichtung, die dazu konfiguriert ist, das Verfahren nach einem der Ansprüche 1 bis 5 oder 6 bis 8 durchzuführen.

10. Computerlesbares Speichermedium, das Anweisungen speichert, die, wenn sie durch einen Computer ausgeführt werden, den Computer dazu veranlassen, das Verfahren nach einem der Ansprüche 1 bis 5 oder 6 bis 8 durchzuführen.

11. Chip, umfassend einen Prozessor, der mit einem Speicher gekoppelt ist, der Anweisungen speichert, die, wenn sie durch den Prozessor ausgeführt werden, den Chip dazu veranlassen, das Verfahren nach einem der Ansprüche 1 bis 5 oder 6 bis 8 durchzuführen.

12. Computerprogrammprodukt, umfassend Anweisungen, die, wenn das Computerprogramm durch einen Computer ausgeführt wird, den Computer dazu veranlassen, das Verfahren nach einem der Ansprüche 1 bis 5 oder 6 bis 8 durchzuführen.

## Revendications

1. Procédé de détection, comprenant :
la réalisation (403), par un dispositif côté terminal, de la détection à une pluralité d'occasions de surveillance avant une heure de début de la durée d'activation de réception discontinue, DRX ;
si le dispositif côté terminal détecte les premières informations d'indication provenant d'un dispositif côté réseau, la détermination (404) d'une première période de temps basée sur une ^{Nième} occasion de surveillance parmi la pluralité d'occasions de surveillance précédant l'heure de début de la durée d'activation DRX, et la réalisation (404) d'une commutation de partie de bande passante, BWP, au cours de la première période de temps ; et
les premières informations d'indication indiquent au dispositif côté terminal de réaliser la commutation BWP, et N est un entier supérieur à 0,
dans lequel la pluralité d'occasions de surveillance se situe entre un premier temps et un second temps ; et
le premier temps se situe avant l'heure de début de la durée d'activation DRX, et la durée entre le premier temps et l'heure de début de la durée d'activation DRX est configurée par le dispositif côté réseau ; et le second temps se situe avant l'heure de début de la durée d'activation DRX,
dans lequel le second temps est déterminé sur la base d'une seconde période de temps et de la première période de temps, la seconde période de temps est une période de temps pendant laquelle le dispositif côté terminal ne détecte pas, avant l'heure de début de la durée d'activation DRX, les informations de commande de liaison descendante, DCI,
comprenant des secondes informations d'indication, et les secondes informations indiquent si le dispositif côté terminal se réveille à l'heure de début de la durée d'activation DRX.

2. Procédé selon la revendication 1, dans lequel une heure de début de la première période de temps est une heure de fin d'une dernière unité de temps comprise dans la ^{Nième} occasion de surveillance avant l'heure de début de la durée d'activation DRX.

3. Procédé selon la revendication 1 ou 2, dans lequel la durée de la première période de temps est égale à un délai de commutation BWP déterminé par le dispositif côté terminal.

4. Procédé selon l'une quelconque des revendications 1 à 3, dans lequel le procédé comprend également :
les premières informations d'indication sont contenues dans les DCI, et les DCI comprennent également les secondes informations d'indication.

5. Procédé selon l'une quelconque des revendications 1 à 3, dans lequel la durée entre le second temps et l'heure de début de la durée d'activation DRX est une valeur maximale entre la durée de la seconde période de temps et la durée de la première période de temps.

6. Procédé de détection, comprenant :
l'envoi (401), par un dispositif côté réseau, de premières informations d'indication lors d'une occasion de surveillance avant une heure de début de durée d'activation de réception discontinue, DRX, dans lequel les premières informations d'indication indiquent à un dispositif côté terminal de réaliser une commutation de bande passante, BWP ; et
la détermination (402), par le dispositif côté réseau, d'une première période de temps sur la base d'une Ni^{ème} occasion de surveillance dans une pluralité d'occasions de surveillance avant l'heure de début de la durée d'activation DRX, dans lequel la première période de temps est une période de temps pendant laquelle le dispositif côté terminal est autorisé à réaliser une commutation BWP,
dans lequel la pluralité d'occasions de surveillance se situe entre un premier temps et un second temps ; et
le premier temps se situe avant l'heure de début de la durée d'activation DRX, et la durée entre le premier temps et l'heure de début de la durée d'activation DRX est configurée par le dispositif côté réseau ; et le second temps se situe avant l'heure de début de la durée d'activation DRX,
dans lequel le second temps est déterminé sur la base d'une seconde période de temps et de la première période de temps, la seconde période de temps est une période de temps pendant laquelle le dispositif côté terminal ne détecte pas, avant l'heure de début de la durée d'activation DRX, les informations de commande de liaison descendante, DCI,
comprenant des secondes informations d'indication, et les secondes informations d'indication indiquent si le dispositif côté terminal se réveille à l'heure de début de la durée d'activation DRX.

7. Procédé selon la revendication 6, dans lequel une heure de début de la première période de temps est une heure de fin d'une dernière unité de temps comprise dans la ^{Nième} occasion de surveillance avant l'heure de début de la durée d'activation DRX.

8. Procédé selon la revendication 6, dans lequel la durée de la première période de temps est égale à un délai de commutation BWP déterminé par le dispositif côté terminal.

9. Appareil de communication configuré pour réaliser le procédé selon l'une quelconque des revendications 1 à 5 ou 6 à 8.

10. Support de stockage lisible par ordinateur stockant des instructions qui, lorsqu'elles sont exécutées par un ordinateur, amènent l'ordinateur à réaliser le procédé selon l'une quelconque des revendications 1 à 5 ou 6 à 8.

11. Puce comprenant un processeur couplé à une mémoire stockant des instructions qui, lorsqu'elles sont exécutées par le processeur, amènent la puce à réaliser le procédé selon l'une quelconque des revendications 1 à 5 ou 6 à 8.

12. Produit de programme informatique comprenant des instructions qui, lorsque le programme informatique est exécuté par un ordinateur, amènent l'ordinateur à réaliser le procédé selon l'une quelconque des revendications 1 à 5 ou 6 à 8.
